# EUROPEAN PATENT APPLICATION

(11) **EP 0 940 210 A1**
(43) Date of publication of application: **08.09.1999**
(21) Application number: 99200658.5
(22) Date of filing: 05.03.1999
(51) Int. Cl.: B23D 51/10

(54) **Clamping device for a saw blade and saw equipped therewith**

(30) Priority: 06.03.1998 NL 1008507
(71) Applicant: SKIL EUROPE B.V., NL-4825 BD Breda (NL)
(72) Inventor: Quirijnen, Antonius Jacobus Johannus, (NL)
(74) Representative: Bartelds, Erik

(57) **Abstract**

Saw blade clamping means (11) are formed by a pressing ball (12) arranged partially in a receiving space (5) for a saw blade (2), and an operating ring (13) arranged rotatably round rod-like part (4). The depth of the receiving space (5) in the clamping direction, is greater than the thickness of the saw blade (2), so that the blade can be pushed with its T-shaped outer end (3) along the lower blocking members (6). By means of a torsion spring (16) the operating ring (13) is biased relative to rod-like part (4) to a position in which recess (15) is removed as far as possible from receiving space (5) and ball (12) is pressed firmly into receiving space (5). In this position a saw blade (2) present in receiving space (5) is therefore pressed with force against rear wall (10) and thus fixed by blocking members (6,7). The rotation movement of operating ring (13) relative to rod-like part (4) is otherwise limited by co-acting stops (29,30).

## Description

The invention relates to a device for clamping a saw blade, provided with a space for receiving a part of the saw blade and clamping means connected to the receiving space, which clamping means comprise a movable operating element and at least one pressing member arranged between the operating element and the saw blade and displaceable between a release position and a clamping position. Such a clamping device is known from for instance EP-A-0 755 313.

The known clamping device, which is suitable for mounting a saw blade provided with an opening in a fretsaw, is formed by a rod-like part slotted at one end, into which part an outer end of the saw blade can be pushed. In the rod-like part is arranged a bore which extends from a side as far as the slotted hole. A pressing ball is accommodated in this bore. Placed around the rod-like part is a rotatable sleeve which is provided on the inside with an eccentric groove running in peripheral direction. The sleeve is biased by means of a torsion spring to a position in which the shallowest portion of the eccentric groove lies opposite the bore with the pressing ball, whereby the pressing ball is thus pressed as deeply as possible into the bore and protrudes into the slotted hole.

By rotating the sleeve counter to the force of the torsion spring a deeper portion of the eccentric groove comes to lie opposite the bore with the ball, whereby the ball can be pressed outward when a saw blade is inserted into the slotted hole. Once the saw blade has been pushed so far into the slotted hole that the opening in the saw blade is located opposite the bore, the sleeve can be released, whereby under the influence of the torsion spring it rotates back to the position in which the ball is pressed into the bore. The ball will then protrude into the opening in the saw blade, whereby the latter is fixed. The saw blade can in this way be clamped quickly and easily.

The known device has the drawback that it is only suitable for clamping saw blades which are provided with an opening for receiving the ball. Such saw blades, which were provided with a U-shaped outer end and were known as "U-shank", were until recently the norm. In recent years however, a large number of manufacturers of sawing machines and saw blades have switched to a saw blade design with a T-shaped outer end, the so-called "T-shank", wherein the opening in the outer end is omitted. However, such a saw blade without opening cannot be fixed in reliable manner with the known clamping device.

The invention therefore has for its object to improve a clamping device of the above described type such that saw blades having an outer end without opening can also be fixed therewith in reliable and simple manner. According to the invention this is achieved with such a clamping device in that the dimensions of the receiving space, as seen in the clamping direction, are greater than those of the saw blade, at least one blocking member extending substantially parallel to the clamping direction is arranged in the receiving space, and the clamping means take a self-locking form. By embodying the receiving space so large that the saw blade can be received therein with clearance, the blade can be pushed with its T-shaped end along the blocking member, whereafter beyond the blocking member the outer end is pressed by the pressing member against a wall of the receiving space and is thereby blocked against sliding out. The self-locking character of the clamping means herein prevents the pressing member from being displaced to its release position as a result of a load on the saw blade directed counter to the clamping direction.

The clamping device is preferably further provided with biasing means co-acting with the clamping means for urging the pressing member to its clamping position. This further precludes movement of the pressing member to its release position.

An easy to operate clamping device is obtained when the operating element is rotatable and has an at least partially spiral-shaped operating surface. The pressing member herein preferably takes the form of a ball protruding at least partially into the receiving space, whereby in combination with the spiral-shaped operating surface only a small actuating force is required.

Optimal fixation of the saw blade in the receiving space is otherwise achieved when the or each blocking member provides the receiving space with an internal form corresponding with the profile of the saw blade.

In order to enable simple removal of the saw blade from the clamping device when the pressing member is displaced to its release position, the device preferably has spring means acting substantially transversely of the clamping direction and co-acting with the saw blade. The saw blade is thus pressed hereby out of the device.

In order to disengage the saw blade from the blocking member of the device, the device can be provided with an ejector member co-acting with the operating element and arranged on the side of the receiving space remote from the pressing member. By moving the operating element the pressing member can thus be moved simultaneously to its release position and the ejector member pressed against the saw blade, which is then as it were flipped above the blocking member.

The invention also relates to a saw, in particular a fretsaw, which is provided with a clamping device as described above.

The invention will now be elucidated on the basis of a number of embodiments, wherein reference is made to the annexed drawing in which corresponding components are designated with the same reference numerals, and in which:

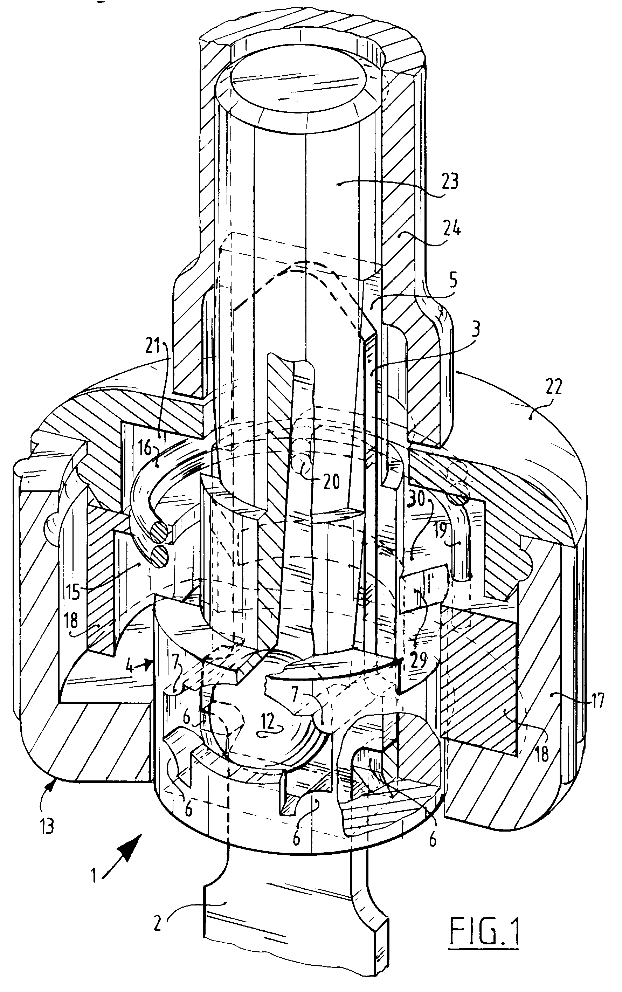

fig. 1 shows a longitudinal section through a clamping device according to a first embodiment of the invention,

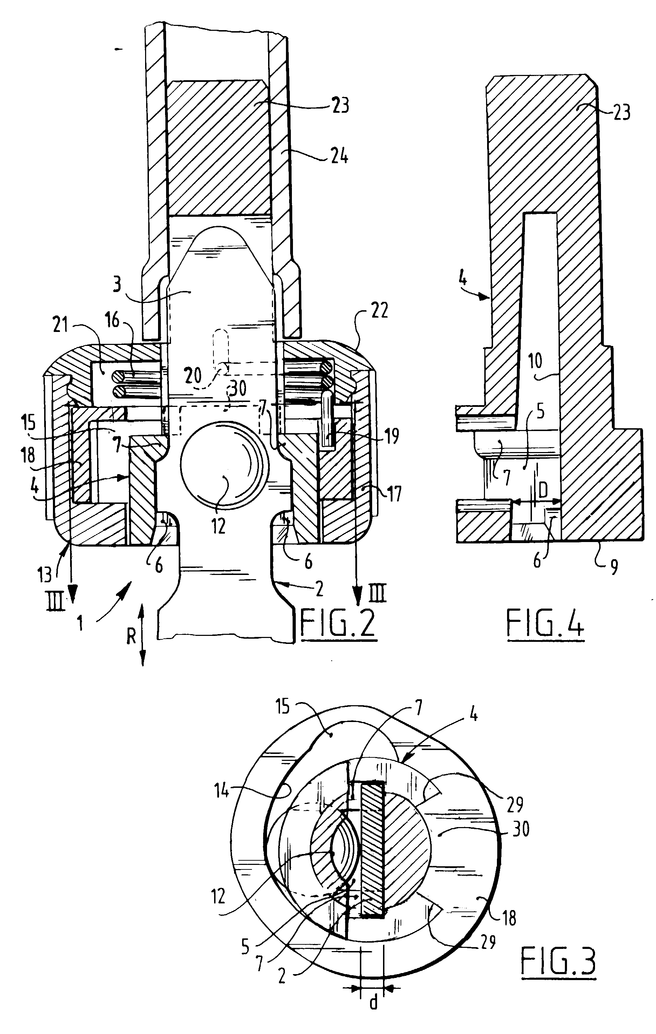

fig. 2 shows a cross-section along the line II-II in fig. 1,
fig. 3 shows a longitudinal section through the rod-like part of the clamping device taken along the line III-III in fig. 1,

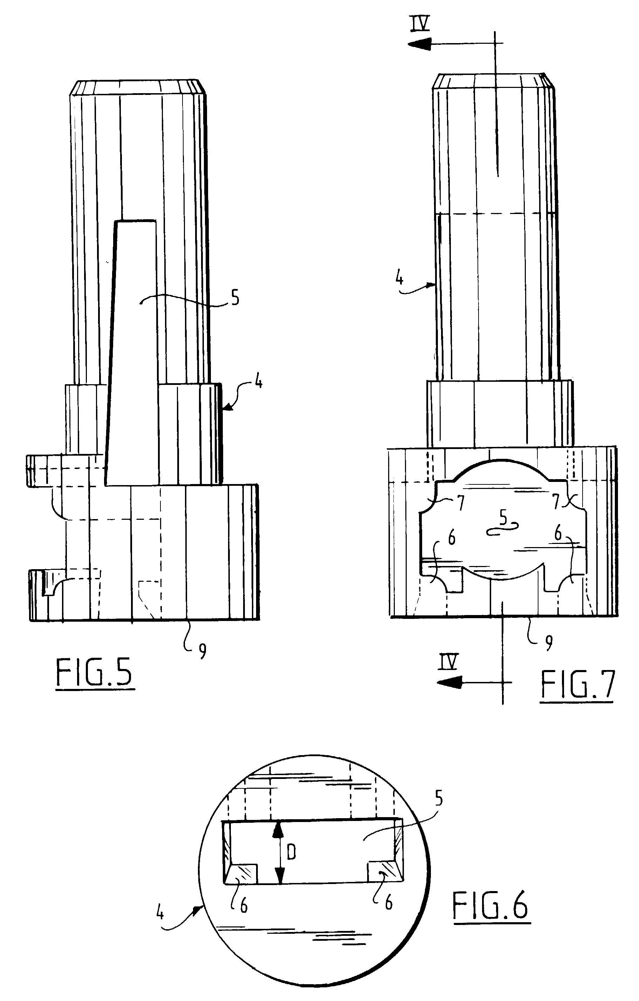

fig. 4, 5 and 6 show respectively a side view, bottom view and front view of the rod-like part,
fig. 7 shows the forces on the pressing member and the operating element of the device in the case of a transverse force on the saw blade,

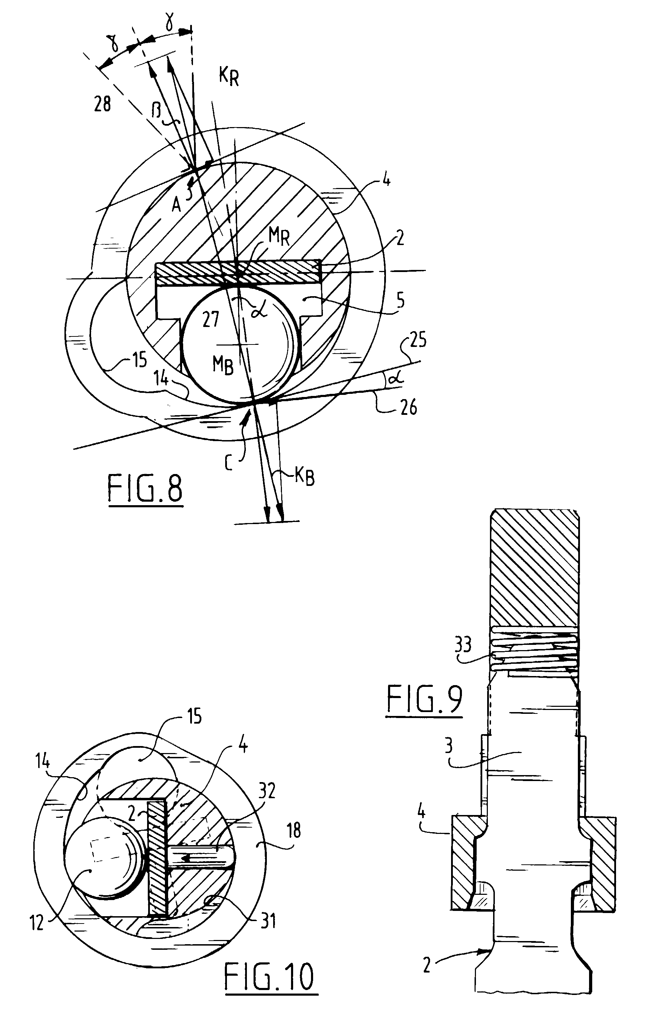

fig. 8 shows a schematic longitudinal section of an alternative embodiment of the rod-like part with a knock-out spring arranged therein, and
fig. 9 shows a schematic cross-section through another alternative embodiment of the clamping device with an ejector member activated by the operating element.

A device 1 for clamping a saw blade 2 with a T-shaped outer end 3 is provided with a rod-like part 4 into which is recessed a receiving space 5 for outer end 3 of saw blade 2. A pair of lower blocking members 6 and a pair of upper blocking members 7 are arranged in receiving space 5, which is accessible through an opening 8 in an underside 9 of rod-like part 4. These four blocking members 6, 7, which extend in the clamping direction from a rear wall 10 of receiving space 5, define a shape which corresponds with the T-shaped profile of outer end 3 of saw blade 2. the depth D of receiving space 5, as seen in the clamping direction, is greater than the thickness d of saw blade 2, so that this latter can be pushed with its T-shaped outer end 3 along the lower blocking members 6, whereafter saw blade 2 is fixed in receiving space 5 because it is pressed against rear wall 10 between blocking members 6, 7 by the clamping means 11 to be discussed hereinbelow.

Clamping means 11 are formed by a pressing ball 12 arranged partially in receiving space 5 and an operating ring 13 arranged rotatably round rod-like part 4. The operating ring is provided with a spiral-shaped operating surface 14 which ends as a recess 15 in which ball 12 comes to rest when it takes up its release position. By means of a torsion spring 16 the operating ring 13 is biased relative to rod-like part 4 to a position in which recess 15 is removed as far as possible from receiving space 5 and ball 12 is pressed firmly into receiving space 5. In this position a saw blade 2 present in receiving space 5 is therefore pressed with force against rear wall 10 and thus fixed by blocking members 6, 7. The rotation movement of operating ring 13 relative to rod-like part 4 is otherwise limited by co-acting stops 29, 30.

Operating ring 13 is built up from a preferably roughened or ribbed outer ring 17 which is easy for the user to handle and in which is arranged an inner ring 18 which defines the actual operating surface 14 and the recess 15. An extremity 19 of torsion spring 16 is fixed in this inner ring 18. The other extremity 20 of the torsion spring is of course fixed to rod-like part 4. Torsion spring 16 is itself further received in a space 21 defined by a cover 22 which fixes inner ring 18 and outer ring 17 relative to each other.

In the shown embodiment the rod-like part 4 of clamping device 1 is received with its upper end 23 in a tubular element 24 which is in turn connected to the drive of the sawing machine (not shown here). This sawing machine can be a fretsaw, wherein saw blade 2 is moved up and downward as according to arrow R.

Because receiving space 5 has a depth D which is greater than the thickness d of saw blade 2, there is the danger that, in the case of a high load on saw blade 2 transversely of the clamping direction, this blade 2 would exert such a great force on pressing ball 12 that the operating ring would hereby be rotated spontaneously counter to the force of biasing spring 16 to a position in which pressing ball 12 would be released from saw blade 2. The clamping mechanism is given a self-locking form in order to prevent this. For this purpose the choice of angle α between the tangent 25 to the spiral-shaped operating surface 14 and the imaginary tangent 26 to a cylindrical surface round centre M_{R} of rod-like part 4 is so small that the angle β resulting therefrom between the line of action 27 of the resultant force K_{B} on pressing ring 12 and the radial 28 from the centre M_{R} of rod-like part 4 lies within the critical angle of friction γ which is determined by the coefficient of friction, therefore by the material and the surface roughness of operating ring 13, pressing ball 12 and rod-like part 4. A careful choice of these two parameters in proportion to the chosen dimensions of rod-like part 4, ball 12 and operating ring 13 can ensure that saw blade 2 remains clamped with certainty in the case of any transverse force occurring in practice.

In order to be able to press saw blade 2 easily over the lower blocking members 6 when ball 12 is moved to its release position, operating ring 13 can be provided a second spiral-shaped operating surface 31 which is roughly symmetrical with the first operating surface 14. This second operating surface 31 can then coact with an ejector member 32 which protrudes through the rod-like part and is moved to saw blade 2 when pressing ball 12 is displaced to its release position.

In addition, a further knock-out spring 33 can be arranged at the top of receiving space 5, whereby saw blade 2 is pressed out of rod-like part 4 through opening 8 when ball 12 is displaced to its release position. This knock-out spring 33 and ejector member 32 are particularly important when saw blade 2 must be replaced after prolonged sawing because it will then generally have become too hot to handle. It is thus not necessary to wait until saw blade 2 has cooled before exchanging it.

The clamping device according to the invention enables rapid and simple clamping of saw blades without continuous opening and with protruding end parts such that they remain fixed with certainty during all occurring sawing operations.

The invention is not limited to the shown embodiments. The clamping mechanism could thus also be used in sawing machines other than fretsaws, or even for tools other than saws. A pressing roller or otherwise formed pressing member could also be used instead of a pressing ball. Nor is the shown spiral shape of the operating surface essential, and could be replaced by another progressively tapering shape. All that is important is that the clamping mechanism is self-locking. The scope of the invention is therefore defined solely by the following claims.

## Claims

1. Device for clamping a saw blade, provided with a space for receiving a part of the saw blade and clamping means connected to the receiving space, which clamping means comprise a movable operating element and at least one pressing member arranged between the operating element and the saw blade and displaceable between a release position and a clamping position, **characterized in that** the dimensions of the receiving space, as seen in the clamping direction, are greater than those of the saw blade, at least one blocking member extending substantially parallel to the clamping direction is arranged in the receiving space, and the clamping means take a self-locking form.

2. Clamping device as claimed in claim 1, **characterized by** biasing means co-acting with the clamping means for urging the pressing member to its clamping position.

3. Clamping device as claimed in claim 1 or 2, **characterized in that** the operating element is rotatable and has an at least partially spiral-shaped operating surface.

4. Clamping device as claimed in any of the foregoing claims, **characterized in that** the pressing member takes the form of a ball protruding at least partially into the receiving space.

5. Clamping device as claimed in any of the foregoing claims, **characterized in that** the or each blocking member provides the receiving space with an internal form corresponding with the profile of the saw blade.

6. Clamping device as claimed in any of the foregoing claims, **characterized by** spring means acting substantially transversely of the clamping direction and co-acting with the saw blade.

7. Clamping device as claimed in any of the foregoing claims, **characterized by** at least one ejector member co-acting with the operating element and arranged on the side of the receiving space remote from the pressing member.

8. Saw provided with a clamping device as claimed in any of the foregoing claims.
